(19) Europäisches Patentamt
European Patent Office
Office européen des brevets

(11) **EP 1 921 736 B1**

(12) **EUROPEAN PATENT SPECIFICATION**

(45) Date of publication and mention
of the grant of the patent:
**31.08.2011 Bulletin 2011/35**

(51) Int Cl.:
*H02K 49/04* (2006.01)      *H02K 49/02* (2006.01)
*H02P 6/24* (2006.01)

(21) Application number: **07119892.3**

(22) Date of filing: **02.11.2007**

(54) **Electromagnetic type retarder**

Elektromagnetischer Retarder

Ralentisseur électromagnétique

(84) Designated Contracting States:
**DE FR GB**

(30) Priority: **10.11.2006 JP 2006305312**

(43) Date of publication of application:
**14.05.2008 Bulletin 2008/20**

(73) Proprietors:
• **TBK Co., Ltd.**
**Machida-shi**
**Tokyo (JP)**
• **Transtron Inc.**
**Kouhoku-ku**
**Yokohama-shi**
**Kanagawa (JP)**

(72) Inventors:
• **Oba, Mitsuyoshi**
**Kanagawa Tokyo (JP)**
• **Miyoshi, Akihiro**
**Tokyo (JP)**
• **Kasai, Hitoshi**
**Kawasaki-shi**
**Kanagawa (JP)**

(74) Representative: **Kronthaler, Wolfgang N.K. et al**
**Kronthaler, Schmidt & Coll.**
**Patentanwälte**
**Pfarrstraße 14**
**80538 München (DE)**

(56) References cited:
EP-A- 1 520 829      JP-A- 10 313 504
JP-A- 11 011 291      JP-A- 63 114 504
JP-A- 2004 129 335

## Description

The present invention relates to an electromagnetic type retarder, and more particularly, relates to an electromagnetic type retarder or an auxiliary braking device for use in a large car, such as a truck, bus or the like.

An electromagnetic type retarder for obtaining a brake torque by utilizing an electric eddy current is publicly known as shown in the Japanese patent application Laid-Open No.84329/1997.

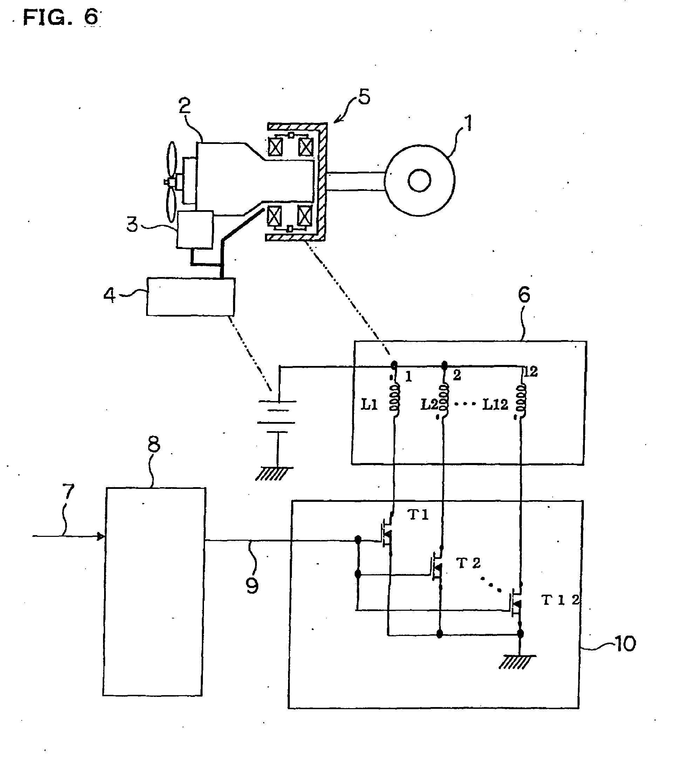

FIG. 6 shows a conventional electromagnetic type retarder, wherein a reference numeral 1 denotes a tire of a car, 2 denotes an engine, 3 denotes an alternator, 4 denotes a battery, and 5 denotes an electromagnetic type retarder. The electromagnetic type retarder 5 comprises a main portion 6 consisting of a stator 12 having magnetic coils L1 to L12 arranged along a circle and spaced apart from one another and a stator yoke 11, and of a steel rotor (drum) 13 surrounding the stator 12 and rotated according to the rotation of the tire 1, a control device 8 for processing an operation signal 7, and a driving device 10 consisting of transistors T1 to T12 connected in series to the magnetic coils L1 to L12, respectively, the transistors T1 to T12 being opened and closed by a drive pulse 9 from the control device 8, respectively.

Each of the magnetic coils L1, L3, L5, L7, L9 and L11 of odd number is opposite in polarity to each of the magnetic coils L2, L4, L6, L8, L10 and L12 of even number.

In such conventional electromagnetic type retarder, a brake torque is generated due to an eddy current generated in the drum 13 when the drum 13 is rotated in the magnetic field formed by a current from the battery 4 passed through the magnetic coils L1 to L12.

In the conventional electromagnetic type retarder, a capacity of the battery 4 of the car has to be increased, because a sufficient electric power is required for exciting the magnetic coils L. The increase of the capacity of the electric power source is effective to enhance the ability of the retarder. However, there are limitations in the increase of the capacity of the electric power source and in the enhance of the ability of the retarder. Further, a headlight of the car would be darkened, because a large electric power is consumed when the retarder is operated.

In JP 11011291 is an electromagnetic type retarder disclosed, comprising a main portion consisting of a stator having a plurality of magnetic coils arranged along a circle and spaced apart from one another and a stator yoke, and of a steel rotor, and a driving device for the main portion to be controlled by an operation signal, wherein the magnetic coils are excited by an additional external current source.

An object of the present invention is to solve the above problems, in particular to avoid the need of any additional external current source.

The above object can be accomplished by an electromagnetic type retarder wherein magnetic coils are excited by an electric power obtained from a braking energy.

An electromagnetic type retarder according to claim 1 comprises a main portion consisting of a stator having a plurality of magnetic coils arranged along a circle and spaced apart from one another and a stator yoke formed of laminated steel plates, and of a steel rotor surrounding the stator and rotated according to the rotation of a tire, and a driving device for the main portion to be controlled by an operation signal, each of the magnetic coils, e. g. consisting of three-phase connections of A phase, B phase and C phase or of two-phase V connections, being connected with a capacitor so as to form a resonance circuit, respectively, the driving device having transistors, e. g. connected in series to each of the three-phase connections or two-phase connections, and controlled so as to be opened and closed by the operation signal, wherein the revolution speed of a rotary magnetic field, e. g. generated by a three-phase or two-phase AC voltage, induced in the magnetic coils forming the resonance circuits by the rotation of the steel rotor is set smaller than the revolution speed of the steel rotor.

Further aspect of the present invention is to provide an electromagnetic type retarder wherein the three-phase connections are formed of a three-phase star connection.

Another aspect of the present invention is to provide an electromagnetic type retarder wherein the three-phase connections are formed of a three-phase delta connection.

According to the present invention, an electromagnetic type retarder of low in cost and weight, and high in reliability can be obtained, because it is not necessary to increase the capacity of the electric power source by using a stator yoke formed of laminated steel plates and capacitors, and by changing the connection style of coils.

Further, the brake torque of the retarder of the present invention can be increased easily, because an electric power obtained from the braking energy for exiting the magnetic coils is larger than the conventional electric power.

Furthermore, the electromagnetic type retarder of the present invention can be made small in size and light in weight, because the electric power can be increased without using an additional dynamo of heavy weight.

These and other aspects and objects of the present invention will be better appreciated and understood when considered in conjunction with the following description and the accompanying drawings. It should be understood, however, that the following description, while indicating preferred embodiments of the present invention, is given by way of illustration and not of limitation. Many changes and modifications are possible within the scope of the appended claims.

BRIEF DESCRIPTION OF THE DRAWINGS

FIG. 1 is a view for explaining an electromagnetic type retarder according to the present invention.

FIG. 2 is a vertically sectional front view of the retarder according to the present invention shown in FIG. 1.

FIG. 3 is a vertically sectional side view of the retarder shown in FIG. 2 .

FIG. 4 is a diagram for explaining the relation of the generated torque and the revolution number of the rotor of the retarder.

FIG. 5 is a diagram for explaining the relation of the exciting power and the revolution number of the rotor of the retarder.

FIG. 6 is a view for explaining a conventional electromagnetic type retarder.

DETAILED DESCRIPTION OF THE PREFERRED EMBODIMENT

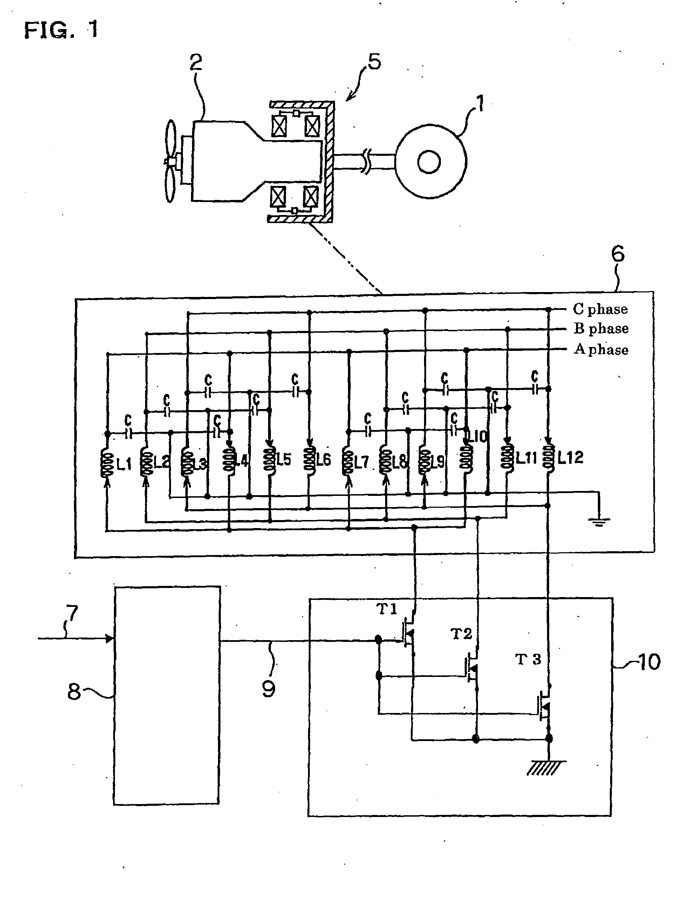

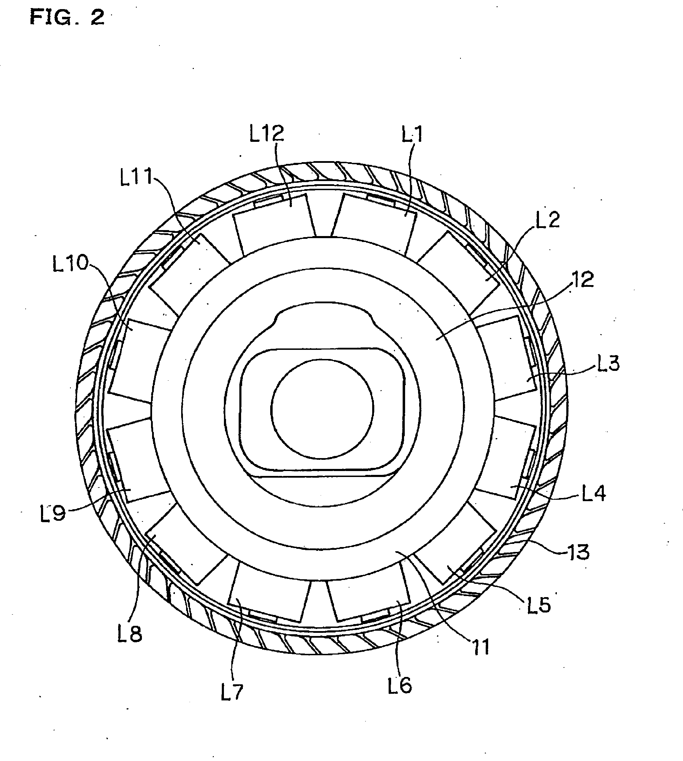

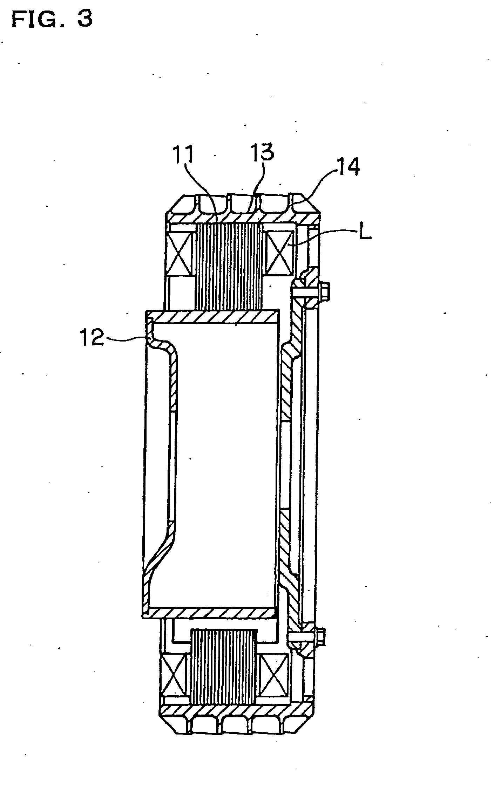

As shown in FIG. 1 to FIG. 3, an electromagnetic type retarder 5 according to the present invention comprises a main portion 6 consisting of a stator 12 having twelve magnetic coils L1 to L12 arranged along a circle and spaced apart from one another and a stator yoke 11 formed of laminated steel plates, and of a steel rotor (drum) 13 surrounding the stator 12 and rotated according to the rotation of a tire 1, a control device 8 for processing an operation signal 7, capacitors C connected in series, respectively, to three-phase connections of A phase, B phase and C phase formed by the magnetic coils L1 to L12 and a driving device 10 consisting of transistors T1 to T3.

A reference numeral 14 denotes fins provided on the outer peripheral surface of the drum 13.

A phase, B phase and C phase of three-phase connections are formed by the twelve magnetic coils L1 to L12. The coils L1 to L12 are connected in parallel through capacitors C, respectively, so as to form resonance circuits. The transistors T1 to T3 of the driving device 10 are connected in series to each of the three-phase connections, and controlled so as to be opened and closed by a driving pulse 9 from the control device 8.

The three-phase connections are formed of a three-phase star connection or three-phase delta connection. The magnetic coils L1 to L12 may be formed of two-phase V connections.

According to the electromagnetic type retarder of the present convention, the driving pulse 9 is generated when the operation signal 7 is applied to the control device 8, so that the transistors T1 to T3 of the driving device 10 are turned ON, and resonance circuits consisting of magnetic coils and the capacitors are formed.

An electric voltage induced in the magnetic coils by the residual magnetic field of the drum 13 becomes a three-phase AC voltage of a specific frequency by the function of the resonance circuits consisting of the magnetic coils and the capacitors, when the revolution number of the drum 13 becomes faster than that of the rotary magnetic field culculated from the resonance frequency of the magnetic coils and the capacitors. In this state, an eddy current is generated in the drum 13 according to the difference between the revolution number Ns of the rotary magnetic field generated by the three-phase AC voltage and the revolution number Nd of the drum 13. By the eddy current generated in the drum 13, the voltage of the magnetic coils is increased, so that the eddy current generated in the drum 13 is further increased.

The increase of the eddy current function is stopped at a point that the magnetic field is not increased even if the voltage of magnetic coils is increased. The eddy current in the drum 13 generates a joule heat, so that a larger braking power is applied to the drum 13. The braking energy is converted into heat and the heat is radiated into atmosphere from the fins 14 provided on the outer peripheral surface of the drum 13.

In the electromagnetic type retarder according to the present invention, the revolution number Ns of the rotary magnetic field induced by the three-phase AC voltage formed by the resonance circuits is reduced lower than the revolution number Nd of the drum 13.

The revolution number Ns of the rotary magnetic field is represented by the formula

$$Ns = \frac{120}{P} \times \frac{1}{2\pi\sqrt{LC}} \left(rpm\right),$$

where L is inductance of magnetic coil, C is a value of capacitance, and P is a pole number.

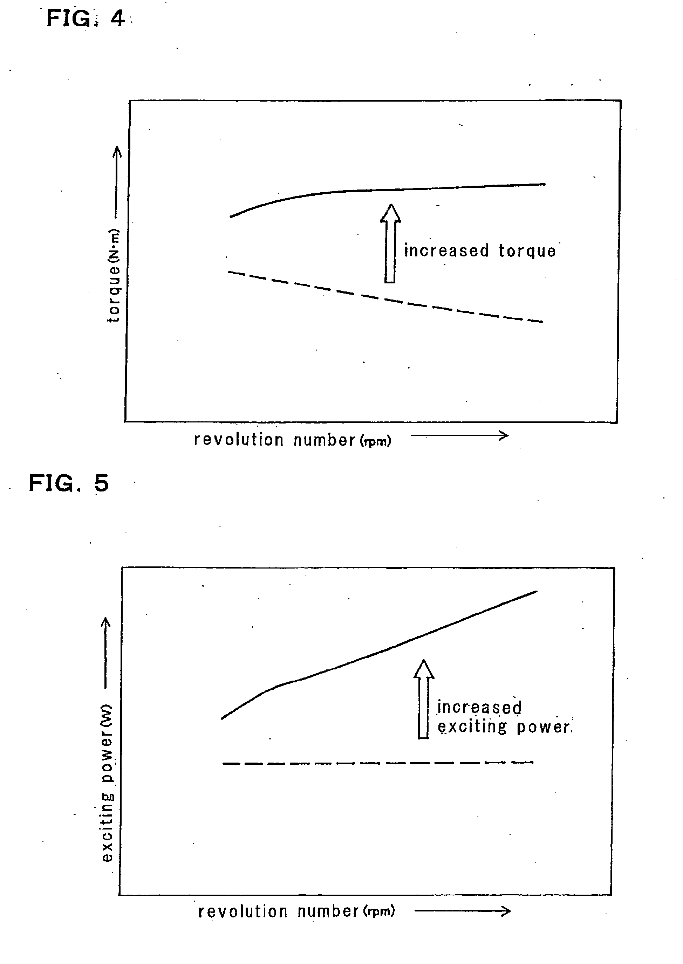

FIG. 4 shows a diagram for explaining the relation of the generated torque and the revolution number of the drum 13, wherein a curve of solid line is in the case of the present invention, and a dotted straight line is in the case of the prior art.

In the electromagnetic retarder of the present invention, the generation torque is higher than the generation torque of the conventional retarder.

FIG. 5 shows the relation of the exciting power and the revolution number of the drum 13, wherein a curve of solid line is in the case of the present invention, and a dotted straight line is in the case of prior art. In the electromagnetic type retarder of the present invention, the exciting power is increased remarkably.

Variations and modifications are possible within the scope of the appended claims.

**Claims**

**1.** An electromagnetic type retarder comprising

a main portion (6) consisting of a stator (12) having a plurality of magnetic coils (L) arranged along a circle and spaced apart from one another and

a stator yoke (11) formed of laminated steel plates, and of a steel rotor (13), and

a driving device (10) for the main portion (6) to be controlled by an operation signal (7), **characterized by** that

the steel rotor (13) is surrounding the stator (12) and rotated according to the rotation of a tire (1),

the magnetic coils (L) consisting either of three-phase connections of A phase, B phase and C phase or two-phase V connection, each of the magnetic coils (L) being connected with a capacitor (C) so as to form a resonance circuit, respectively,

the driving device (10) having transistors (T) connected in series to each of the three-phase connections or two-phase V connections, respectively, and controlled so as to be opened and closed by the operation signal (7),

wherein the revolution speed of a rotary magnetic field generated either by three-phase AC voltage or two-phase AC voltage, respectively, induced in the magnetic coils (L) forming the resonance circuits by the rotation of the steel rotor (13) is set smaller than the revolution speed of the steel rotor (13).

2. The electromagnetic type retarder as claimed in claim 1, wherein the three-phase connections are formed of a three-phase star connection.

3. The electromagnetic type retarder as claimed in claim 1, wherein the three-phase connections are formed of a three-phase delta connection.

**Patentansprüche**

1. Elektromagnetischer Retarder mit:

einem Hauptabschnitt (6), bestehend aus einem Stator (12) mit einer Vielzahl von Magnetspulen (L), die in einem Abstand voneinander kreisförmig angeordnet sind, und

einem Statorjoch (11), das aus laminierten Stahlplatten gebildet ist, sowie aus einem Stahlrotor (13), und

einer Antriebsvorrichtung (10) für den Hauptabschnitt (6), die durch ein Betriebssignal (7) gesteuert wird,

**dadurch gekennzeichnet, dass**

der Stahlrotor (13) den Stator (12) umgibt und entsprechend der Drehung eines Reifens (1) gedreht wird,

wobei die Magnetspulen (L) aus dreiphasigen Schaltungen, jeweils mit einer Phase A, einer Phase B und einer Phase C, oder aus zweiphasigen V-Schaltungen bestehen, wobei jede der Magnetspulen (L) an einen Kondensator (C) angeschlossen ist, um einen entsprechenden Schwingkreis zu bilden, wobei die Antriebsvorrichtung (10) Transistoren (T) aufweist, die mit jeder der dreiphasigen Schaltungen oder zweiphasigen V-Schaltungen in Reihe geschaltet und so steuerbar sind, dass sie durch das Betriebssignal (7) geöffnet und geschlossen werden,

wobei die Drehzahl eines Drehmagnetfeldes, das durch eine dreiphasige bzw. eine zweiphasige Wechselspannung erzeugt wird, die in den die Schwingkreise bildenden Magnetspulen (L) durch die Drehung des Stahlrotors (13) induziert wird, niedriger eingestellt ist, als die Drehzahl des Stahlrotors (13).

2. Elektromagnetischer Retarder nach Anspruch 1, wobei die dreiphasigen Schaltungen als dreiphasige Sternschaltung ausgebildet sind.

3. Elektromagnetischer Retarder nach Anspruch 1, wobei die dreiphasigen Schaltungen als dreiphasige Deltaschaltung ausgebildet sind.

**Revendications**

1. Ralentisseur du type électromagnétique, comprenant

une partie principale (6), constituée d'un stator (12) qui présente une pluralité de bobines magnétiques (L), disposées en cercle et écartées les unes des autres, et

une culasse de stator (11), constituée de plaques en acier laminé, et d'un rotor en acier (13), et

un dispositif d'entraînement (10) pour la partie principale (6), destiné à être commandé par un signal d'opération (7),

**caractérisé en ce que**

ledit rotor en acier (13) entoure le stator (12) et est tourné en fonction de la rotation d'un pneu (1),

lesdites bobines magnétiques (L) étant constituées ou bien de connexions triphasées d'une phase A, phase B et phase C, ou bien de connexions en V biphasées, chacune des bobines magnétiques (L) étant reliée à un condensateur (C) de manière à constituer un circuit résonnant respectif,

le dispositif d'entraînement (10) présentant des transistors (T), qui sont reliés en série avec chacune desdites connexions triphasées ou connexions en V biphasées et commandés de manière à être ouverts et fermés par le signal d'opération (7),

la vitesse de rotation d'un champ magnétique tournant, qui est engendré respectivement par une tension alternative triphasée ou une tension alternative biphasée, induite dans les bobines magnétiques (L) constituant lesdits circuits résonnants par la rotation du rotor en acier (13), étant réglée de manière à être inférieure à la vitesse de rotation du rotor en acier (13).

2. Ralentisseur du type électromagnétique selon la revendication 1, dans lequel les connexions triphasées sont réalisées par une connexion triphasée en étoile.

3. Ralentisseur du type électromagnétique selon la revendication 1, dans lequel les connexions triphasées sont réalisées par une connexion triphasée en delta.

FIG. 1

FIG. 2

FIG. 3

## FIG. 4

increased torque

torque(N·m)

revolution number (rpm)

## FIG. 5

increased
exciting power

exciting power(W)

revolution number (rpm)

## FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9084329 A

- JP 11011291 B